# EUROPÄISCHE PATENTSCHRIFT

(11) **EP 3 033 302 B1**
(45) Veröffentlichungstag und Bekanntmachung des Hinweises auf die Patenterteilung: **08.11.2017**
(21) Anmeldenummer: 14750185.2
(22) Anmeldetag: 06.08.2014
(51) Int. Cl.: C01B 21/28, B01J 8/00, B01J 8/02

(54) **KORBARTIGE VORRICHTUNG MIT WANDISOLIERUNG**
BASKET-LIKE DEVICE WITH WALL INSULATION
DISPOSITIF DE TYPE CORBEILLE AVEC ISOLATION DE PAROI

(30) Priorität: 16.08.2013 EP 13180626
(43) Veröffentlichungstag der Anmeldung: 22.06.2016
(73) Patentinhaber: BASF SE, 67056 Ludwigshafen am Rhein (DE)
(72) Erfinder: OLBERT, Gerhard, 69221 Dossenheim (DE); FRIEDRICH, Holger, 67549 Worms (DE); WÖLFERT, Andreas, 74906 Bad Rappenau (DE); KUHN, Robert, 67454 Hassloch (DE); LENKE, Tobias, 67245 Lambsheim (DE); GMEINER, Wolfgang, 67125 Dannstadt-Schauernheim (DE)
(74) Vertreter: BASF IP Association
(86) Internationale Anmeldenummer: PCT/EP2014/066880
(87) Internationale Veröffentlichungsnummer: WO 2015/022247

(56) Entgegenhaltungen:
- EP-A1- 1 419 812
- EP-A2- 0 355 690
- WO-A1-2013/034303
- DE-A1-102007 026 712

## Beschreibung

Die vorliegende Erfindung betrifft eine in einem Reaktor R, vorzugsweise einem Hochtemperaturreaktor aufgenommene Vorrichtung D, einen Reaktor R enthaltend die Vorrichtung D, die Verwendung der Vorrichtung D, die Verwendung des Reaktors R enthaltend die Vorrichtung D sowie ein Verfahren zur Herstellung von Stickstoffoxiden oder Salpetersäure unter Verwendung der Vorrichtung D, jeweils wie in den Ansprüchen definiert.

In Reaktoren aufgenommene Vorrichtungen, beispielsweise in korbartiger Gestalt, die in der Regel, auch aus Konstruktions- oder Festigkeitsgründen, aus gut wärmeleitfähigen Werkstoffen wie Metall oder Metalllegierungen, zum Beispiel Stahl bestehen, dehnen sich aus, wenn der Reaktor beispielsweise auf Betriebstemperatur aufgeheizt wird oder sich durch Reaktionswärme aufheizt und ziehen sich zusammen, wenn der Reaktor abkühlt.

Wenn derartige Vorrichtungen leicht verschiebbare, partikuläre, beispielsweise geschüttete Füllungen aus zylindrischen oder sternförmigen Katalysatorpartikeln enthalten, bilden sich durch die Wärmeausdehnungsunterschiede von Vorrichtung und genannter Füllung in der Regel im Randbereich der Vorrichtung Vertiefungen - oft unregelmäßig und trichterförmig - in die Partikel üblicherweise aus dem Randbereich der Vorrichtung nachrieseln bzw. absacken.

Dies ist unerwünscht, da die Inhomogenität der Füllung üblicherweise verschlechterte Eigenschaften, beispielsweise bezüglich deren katalytischen Verhaltens zur Folge hat. In den Vertiefungen im Randbereich ist nämlich beispielsweise die Strömungsgeschwindigkeit eines Gases größer als in Bereichen ohne Vertiefung, damit sinkt üblicherweise die Verweilzeit des Gases im Randbereich, dem Reaktionsgas steht dort auch weniger katalytische Fläche zur Verfügung, was in der Regel zu geringeren katalytischen Umsätzen im Randbereich und insgesamt führt.

Die oben beschriebenen Nachteile finden sich beispielsweise in Verfahren zur Herstellung von Stickstoffoxiden und/oder Salpetersäure durch Oxidation von Ammoniak in Gegenwart eines Katalysators, beispielsweise eines edelmetallhaltigen Katalysatornetzes. Hierbei werden die Oxidationsprodukte des Ammoniaks üblicherweise durch eine Schüttung eines partikulären Lachgaszersetzungskatalysators geführt, die sich üblicherweise in einer korbartigen Vorrichtung befindet. So führen in diesem Verfahren beispielsweise die oben genannten trichterförmigen Vertiefungen in dieser Schüttung aus Lachgaszersetzungskatalysator zur verringerten Zersetzung des Lachgases im Randbereich der Katalysatorschüttung, was wiederum üblicherweise höhere Lachgas-Emissionen der Produktionsanlage nach sich zieht, die unerwünscht sind.

WO 2004/005187 A1 (Yara International) beschreibt einen sogenannten Brennerkorb mit Metallwänden und einer perforierten Bodenplatte, welcher sich in einem Ammoniak-Oxidationsbrenner befindet. Die Metallwände haben eine bestimmte Geometrie um eine Inhomogenität der Katalysatorschüttung zu unterdrücken. WO 2004/005187 A1 offenbart nicht eine wärmeisolierende Schicht.
WO 03/011448 A1 (Johnson Matthey Plc) beschreibt ein fluid-durchlässiges Festbett auf einem perforierten Boden der von einer Wand umschlossen ist. Die Wand hat eine bestimmte Geometrie um eine Inhomogenität der Katalysatorschüttung zu unterdrücken. WO 03/011448 A1 offenbart nicht eine wärmeisolierende Schicht. DE 10 2007 026 712 beschreibt Reaktoren für katalytische, exotherme Gasphasenreaktionen, insbesondere zur Ammoniakoxidation beispielsweise in Salpetersäureanlagen, mit in Strömungsrichtung eines Eduktgases gesehen einer Eintrittszone, einer Reaktionszone, enthaltend einen Katalysator, und einer Austrittszone für das Produktgas. Die Reaktoren weisen im Bereich der Eintrittszone Mittel, beispielsweise Isoliermäntel und/oder Vorrichtungen zum Transport von Kühlmittel auf, welche den Wärmetransport von der Reaktionszone in die Eintrittszone verringern und somit die Risiken einer Vorzündung des eingesetzten Eduktgasgemisches oder des Ablaufs unerwünschter Nebenreaktionen
in der Eintrittszone verringern und/oder worin die Innenwände des Reaktors im Bereich der Eintrittszone aus inertem Material bestehen..

Aufgabe der vorliegenden Erfindung war es, eine Vorrichtung zur Verfügung zu stellen, welche sich, insbesondere in den Randbereichen, nicht stark ausdehnt und somit die Homogenität einer in ihr aufgenommen Schüttung aus Partikeln aufrecht erhält, wobei möglichst die anfängliche Schütthöhe praktisch über die gesamte Querschnittsfläche der Vorrichtung unverändert bleibt und Vertiefungen im Randbereich der Vorrichtung vermieden oder vermindert werden. Demgemäß wurde die in einem Reaktor R, vorzugsweise einem Hochtemperaturreaktor, aufgenommene Vorrichtung D, ein Reaktor R enthaltend die Vorrichtung D, die Verwendung der Vorrichtung D, die Verwendung des Reaktors R enthaltend die Vorrichtung D sowie ein Verfahren zur Herstellung von Stickstoffoxiden oder Salpetersäure unter Verwendung der Vorrichtung D, jeweils wie in den Ansprüchen definiert, gefunden.
In einer bevorzugten Ausführungsform der Erfindung werden die Vorrichtung D und der Reaktor R, jeweils wie im Folgenden beschrieben, in einem Verfahren zur Herstellung von Stickstoffoxiden und/oder Salpetersäure verwendet. Diese Ausführungsform wird im Folgenden auch als "NOx/HNO₃-Ausführungsform" bezeichnet, und das Folgende gilt ausdrücklich - wo nicht explizit anders angegeben - insbesondere für die NOx/HNO₃-Ausführungsform.
Verfahren zur Herstellung von Stickstoffoxiden und/oder Salpetersäure, üblicherweise durch katalytische Oxidation von Ammoniak mit einem sauerstoffhaltigen Gas, in der Regel Luft, sind bekannt und beispielsweise unter"Nitric Acid, Nitrous Acid, and Nitrogen Oxides" in Ullmanns Encyclopedia of Industrial Chemistry, Sixth, Completely Revised Edition, Volume 23, Seiten 1 bis 49, 2003, Wiley-VCH Verlag GmbH & Co. KGaA, Weinheim beschrieben.
Üblicherweise wird in einem Verfahren zur Herstellung von Stickstoffoxiden und/oder Salpetersäure ein Gemisch aus Ammoniak und einem sauerstoffhaltigen Gas, beispielsweise Luft oder auch reiner Sauerstoff, bei üblicherweise relativ hoher Temperatur, beispielsweise im Bereich von 800 bis 900 °C, katalytisch, beispielsweise an einem Netz aus Edelmetall wie Platin oder Platin-Rhodiumlegierung, umgesetzt und die entstandenen Reaktionsprodukte, die in der Regel Stickstoffmonoxid als Hauptkomponente und Distickstoffoxid ("Lachgas") als Nebenkomponente enthalten, strömen üblicherweise durch ein Bett mit katalytischen und/oder nicht-katalytischen, üblicherweise keramischen, gegenüber den Reaktionsbedingungen im Reaktor beständigen Formkörpern, welches in Strömungsrichtung stromabwärts, üblicherweise unterhalb des Katalysatornetzes, angeordnet ist.

Dieses Bett ist üblicherweise hinsichtlich der Zersetzung von Distickstoffoxid katalytisch aktiv, üblicherweise in einer korbartigen Vorrichtung aufgenommen und baut in der Regel das Distickstoffmonoxid in die Elemente Stickstoff (N₂) und Sauerstoff (O₂) ab. Nachdem das Reaktionsgemisch die üblicherweise korbartige Vorrichtung verlassen hat, wird es üblicherweise an Wärmetauschern abgekühlt, wobei es mit Sauerstoff unter Bildung von Stickstoffdioxid weiter reagiert. Das Reaktionsgemisch wird in der Regel über verschiedene Wärmetauscher weiter abgekühlt - wobei teilweise bereits Salpetersäure auskondensieren kann - und letztendlich wird das Reaktionsgemisch in einer Absorptionsvorrichtung mit Wasser unter Bildung von Salpetersäure umgesetzt. Die zuvor in der Kühlung/Kondensation eventuell auskondensierte verdünnte Salpetersäure wird üblicherweise ebenfalls in die Absorptionsvorrichtung eingespeist.

Im Folgenden wird die Erfindung genauer beschrieben.

Der Werkstoff für die Vorrichtung D ist üblicherweise ein Hochtemperaturwerkstoff aus Metall, zum Beispiel Inconel 600 (Werkstoff-Nr. 2.4816), Alloy 602 CA, Haynes Alloy oder auch Werkstoffe aus austinitischen Stählen mit den Werkstoffbezeichnungen 1.4828 und 1.4835.

Ein gut geeigneter Werkstoff für die Vorrichtung D ist Inconel 600 oder Stahl mit der Werkstoffnummer 1.4835 oder Alloy 602 CA oder Haynes Alloy.

Bevorzugt als Werkstoff für die Vorrichtung D sind Inconel 600, Stahl mit der Werkstoffnummer 1.4835 oder Alloy 602 CA.

Der Boden B der Vorrichtung D ist in der Regel perforiert, wobei die Art und Geometrie der Perforierung nicht kritisch ist und insbesondere durchlässig für Gase und/oder Flüssigkeiten, vorzugsweise für Gase. Üblicherweise ist der Boden B so perforiert, dass die Partikel die er üblicherweise trägt nicht durch die Perforierung fallen können.

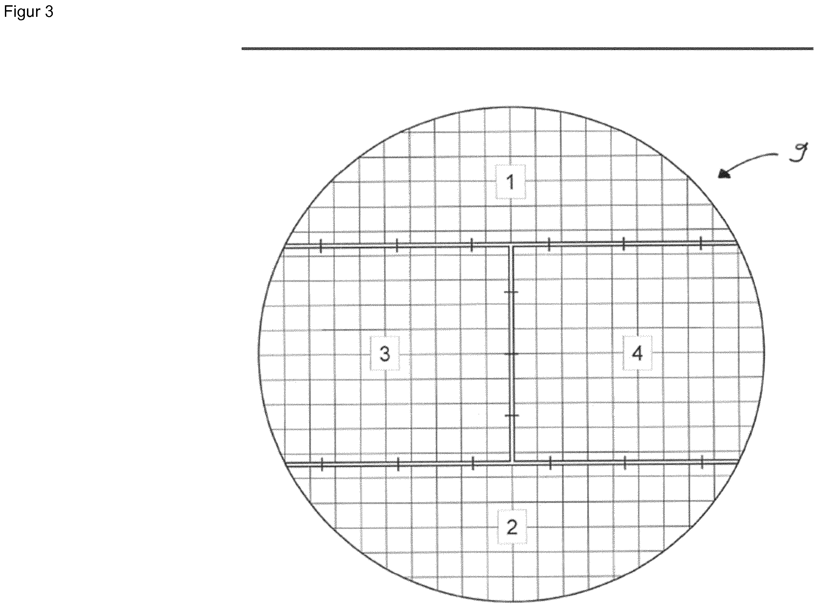

In einer Ausführungsform enthält der Boden B ein Tragteil, zum Beispiel einen Rost aus Rahmen und einer Wabenkonstruktion, auf dem in der Regel ein metallisches Bodennetz oder mehrere, beispielsweise zwei bis drei, metallische Bodennetze, üblicherweise unterschiedlicher Maschenweiten und/oder unterschiedlicher Maschendrahtstärken, aufliegt. Das Tragteil, zum Beispiel ein Rost aus Rahmen und einer Wabenkonstruktion, kann aus einem Stück bestehen, es kann aber auch aus mehreren Segmenten, bevorzugt 2 bis 8 Segmenten, besonders bevorzugt 4 bis 6 Segmenten zusammengesetzt sein, wobei die Geometrie der Segmente mannigfaltig sein kann, beispielsweise Viertelkreissegmente, Sechstelkreissegmente, Achtelkreissegmente, ergo "Kuchenstück-Geometrie", beispielsweise aber auch eine in Figur 3 dargestellte Segmentierung.

Das genannte Bodennetz oder die genannten Bodennetze können aus einem Stück sein und/oder aus mehreren Teilstücken gebildet werden und nebeneinander und/oder übereinander, vorzugsweise überlappend, vorzugsweise auf einem Tragteil, zum Beispiel einen Rost aus Rahmen und einer Wabenkonstruktion, angeordnet werden, wobei üblicherweise ein Netz dickerer Drahtstärke und größerer Maschenweite zuunterst liegt. Üblicherweise werden im Randbereich des Bodens B das genannte Bodennetz oder die genannten Bodennetze seitlich hochgezogen, so dass sie beispielsweise die Seitenbegrenzung W und/oder die wärmeisolierende Schicht S teilweise oder vorzugsweise vollständig überdecken.

Die Öffnungen der oben genannten Bodennetze können jegliche Querschnittsgeometrie haben, beispielsweise, rechteckig, sechseckig, rund.

Üblicherweise ist der Boden B aus dem Werkstoff 1.4835, Alloy 602 CA und Inconel 600, vorzugsweise Inconel 600 oder Alloy 602 CA.

Die Querschnittsgeometrie des Bodens B an sich richtet sich in der Regel nach der Querschnittsgeometrie des Reaktors R in welchem er üblicherweise aufgenommen ist. Vorzugsweise ist die Querschnittsgeometrie des Bodens B dieselbe wie jene des Reaktors R in dem der Boden B aufgenommen ist.

Als Querschnittsgeometrie für den Boden B und/oder den Reaktor R in welchem er aufgenommen ist kommen eckige, vorzugsweise viereckige oder sechseckige, besonders bevorzugt rechteckige oder gleichmäßig sechseckige Querschnitte in Frage.

Weiterhin kommen als Querschnittsgeometrie für den Boden B und/oder den Reaktor R in welchem er aufgenommen ist praktisch runde oder eliptische Querschnitte, vorzugsweise praktisch runde oder runde Querschnitte für den Boden B und/oder den Reaktor R in welchem er aufgenommen ist in Frage. Besonders bevorzugt ist der Querschnitt des Bodens B und/oder der Querschnitt des Reaktors in welchem er aufgenommen ist praktisch rund oder rund.

Der Boden B kann beispielsweise unmittelbar oder über ein Beabstandungssystem auf einem stromabwärts unter dem Boden B angeordneten Kühler oder Wärmetauscher im Reaktor R gelagert sein. Der Boden B kann auch an einem separaten Tragsystem, zum Beispiel aus einer mittleren Stütze und seitlichen Laschen, letztere üblicherweise in Umfangsrichtung an der Reaktorinnenwand angebracht, im Reaktor R angebracht sein.

Der Werkstoff für die Seitenbegrenzung W der Vorrichtung D ist üblicherweise der gleiche wie für den Boden B.

Die Seitenbegrenzung W ist in dem Randbereich des Bodens B so angeordnet, dass sie den Boden B vollständig umschließt und einen Raum mit dem Volumen V bildet das zum Teil oder vollständig mit katalytischen und/oder nicht-katalytischen Formkörpern gefüllt ist. Diese katalytischen und/oder nicht-katalytischen Formkörpern können sein: Feststoffpartikel, in der Regel mit einer Länge im Bereich von 3 bis 30 mm, einem Durchmesser im Bereich von 2 bis 10 mm - beispielsweise mit zylindrischem oder sternförmigen Querschnitt - und/oder größere Formkörper, beispielsweise in Form von sechseckigen Waben. Weitere katalytischen und/oder nicht-katalytischen Formkörpern können folgende sein: High Flow Ringe, Ringe, Kugeln, Stränge, Hohlstränge oder weitere Feststoffpartikel und/oder Formkörper.
Die Seitenbegrenzung W ist üblicherweise relativ zum Boden B in den Winkeln von 45° bis 135°, vorzugsweise praktisch rechtwinklig angeordnet. Die Seitenbegrenzung W ist üblicherweise gerade, ergo in vertikaler Richtung praktisch nicht gebogen.

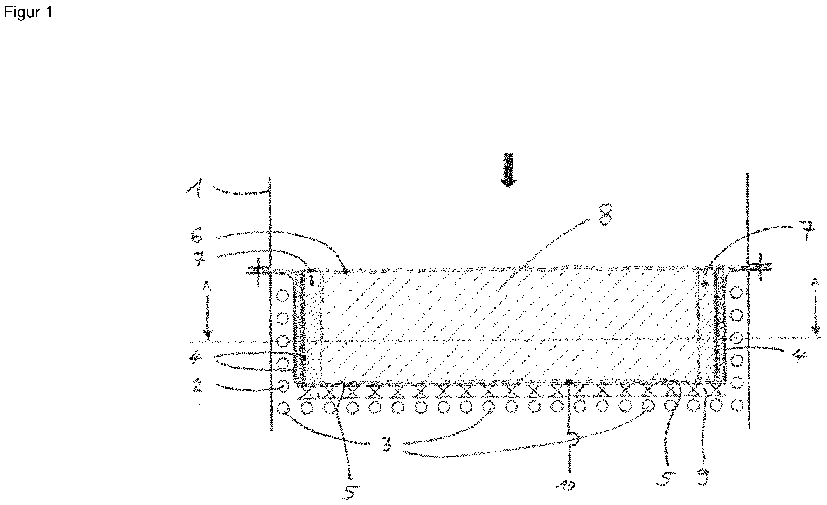

In den Figuren 1, 2, 4, 5, 6,7, 8 und 9 sind beispielhaft Formen der Seitenbegrenzung W - zusammen mit der wärmeisolierenden Schicht S - dargestellt, in welchen die Bezugszeichen die hierin genannte Bedeutung haben.

Das Verhältnis der Höhe der Seitenbegrenzung W zum lichten Durchmesser des Bodens B liegt üblicherweise im Bereich von 0,04 bis 0,2.

Übliche Höhen der Seitenbegrenzung W liegen im Bereich von 100 bis 1000 mm, bevorzugt 150 bis 600 mm.

Übliche lichte Durchmesser des Bodens B liegen im Bereich von 2500 bis 6000 mm.

Die Seitenbegrenzung W kann, muss aber nicht, aus einem Stück angefertigt sein, sondern kann auch aus Einzelteilen bzw. Segmenten bestehen.

Zumindest auf einem Teil der Fläche der Innenseite der Seitenbegrenzung W befindet sich eine wärmeisolierende Schicht S, vorzugsweise in dem sich dem Boden B direkt stromaufwärts anschließenden Bereich. Die wärmeisolierende Schicht S kann die Fläche der Innenseite der Seitenbegrenzung W beispielsweise zu 30% bis praktisch 100%, vorzugsweise praktisch vollständig bedecken.

Vorzugsweise bedeckt die wärmeisolierende Schicht S mindestens die unteren 30%, beispielsweise 30% bis 90%, also jene dem Boden B nächstliegenden Teile der Fläche der Innenseite der Seitenbegrenzung W.

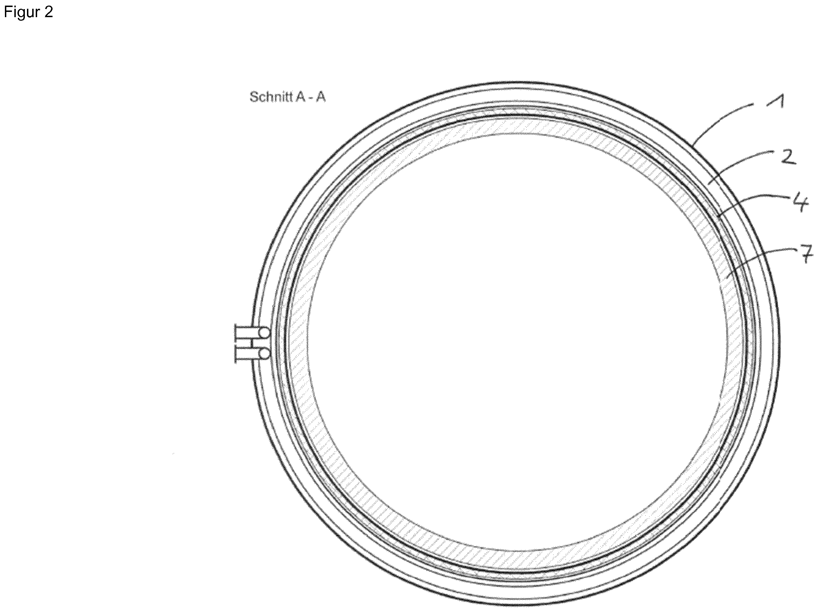

Die wärmeisolierende Schicht S umschließt auf der Innenseite der Seitenbegrenzung W diese in der Regel vollständig, beispielhaft in Figur 2 dargestellt, in welcher die Bezugszeichen die hierin genannte Bedeutung haben.

Die wärmeisolierende Schicht S schließt sich üblicherweise praktisch unmittelbar, also praktisch abstandsfrei, in Richtung Mittelpunkt der Vorrichtung D an die Innenseite der Seitenbegrenzung W an. Die wärmeisolierende Schicht S kann der dem Mittelpunkt der Vorrichtung D zugewandten Seite, beispielsweise an der Kontaktseite zur Schüttung aus Partikeln oder den Formkörpern, praktisch jegliche Querschnittsgeometrie annehmen, beispielsweise von gerade (rechteckig) bis schräg, beispielsweise in Form eines Trapezes, nach innen gewölbt (konkav) und nach außen, also dem Mittelpunkt der Vorrichtung D zugewandten Seite - gewölbt (konvex), stufenartig mit einer oder mehreren Stufen. Beispielhaft ist dies in den Figuren 1, 2, 4, 5, 6,7, 8 und 9 dargestellt, in welchen die Bezugszeichen die hierin genannte Bedeutung haben.
Die wärmeisolierende Schicht S kann aus einem Stück bestehen oder aus einzelnen Elementen zur gewünschten Querschnittsgeometrie zusammengesetzt werden, wie weiter unten näher beschrieben wird.
Die Dicke dieser wärmeisolierenden Schicht S bezogen auf den Durchmesser des Bodens B liegt üblicherweise im Bereich von 1 % bis 5 %, beispielsweise bei 1,7 %. Beispielsweise ist die wärmeisolierende Schicht S bei einem Durchmesser des Bodens B von 2500 bis 6000 mm 100 mm dick.

Das Material für die wärmeisolierende Schicht S wird ausgewählt aus der Gruppe der mikroporösen Materialien, wobei die vorbenannten Materalien sich in der Regel im Temperaturbereich von ca. 700 bis 1100 °C nicht zersetzen und üblicherweise eine Wärmeleitfähigkeit im Bereich von 0,04 bis 0,09 W/m/K haben. Das mikroporöse Material sind mikroporöse silikatische Substanzen, enthaltend hochdisperse Kieselsäure und Trübungsmittel, die sich im Temperaturbereich von ca. 700 bis 1100 °C nicht zersetzen und im Temperaturbereich von 700 bis 1100 °C eine Wärmeleitfähigkeit im Bereich von 0,04 bis 0,09 W/mK haben, beispielsweise die Produkte WDS ® High und WDS® Ultra der Firma Porextherm, siehe dreiseitiges Datenblatt Version 1.4/15-02 10/HH WDS® High und dreiseitiges Datenblatt Version 1.03/15-02 10/HH WDS® Ultra der Firma Porextherm Dämmstoffe GmbH, Heisinger Straße 8/10, 87437 Kempten, www.porextherm.com.
Die wärmeisolierende Schicht S kann aus Platten von beispielsweise 10 bis 50 mm Dicke aus den mikroporösen silikatischen Substanzen, aufgebaut werden, wobei die Platten den benötigten Formen bzw. Querschnittsgeometrien der wärmeisolierenden Schicht W angepasst werden.

In einer bevorzugten Ausführungsform sind die mikroporösen, silikatischen Substanzen- nachdem sie bei 850 °C thermisch vorbehandelt wurden - und Silikatfasern in Form von Matten, für die wärmeisoliernde Schicht S eingehaust in Kassetten (im Folgenden auch als "Isolierkassetten" bezeichnet), wie im Folgenden beschrieben, welche dann, wie im Folgenden beschrieben, im allgemeinen zu der wärmeisolierenden Schicht S zusammengesetzt werden können.
Beispielhaft sei im folgend eine Isolierkassette mit eingehaustem Isoliermaterial beschrieben. Die Isolierkassette besteht üblicherweise aus einem Metallgehäuse, beispielsweise aus hochtemperaturbeständigen Stählen, das mit den mikroporösen silikatischen Substanzen, und Silikatfasern, letztere vorzugsweise in Form von Matten, befüllt ist. Beispielsweise ist das in die Isolierkassetten eingebaute mikroporöse Material durch Silikatfasermatten oder Blähmatten aus Vermiculit und Silikatfasern zur Metallwand hin beabstandet.
Das Metallgehäuse der Isolierkassetten kann aus einem oder mehreren Metallen bestehen, beispielsweise Hochtemperaturwerkstoffen wie Inconel 600, Alloy 602 CA üblicherweise auf der höherer Temperatur zugewandten Isolierkassettenseite und Werkstoff 1.4541 auf der üblicherweise geringerer Temperatur zugewandten Isolierkassettenseite.

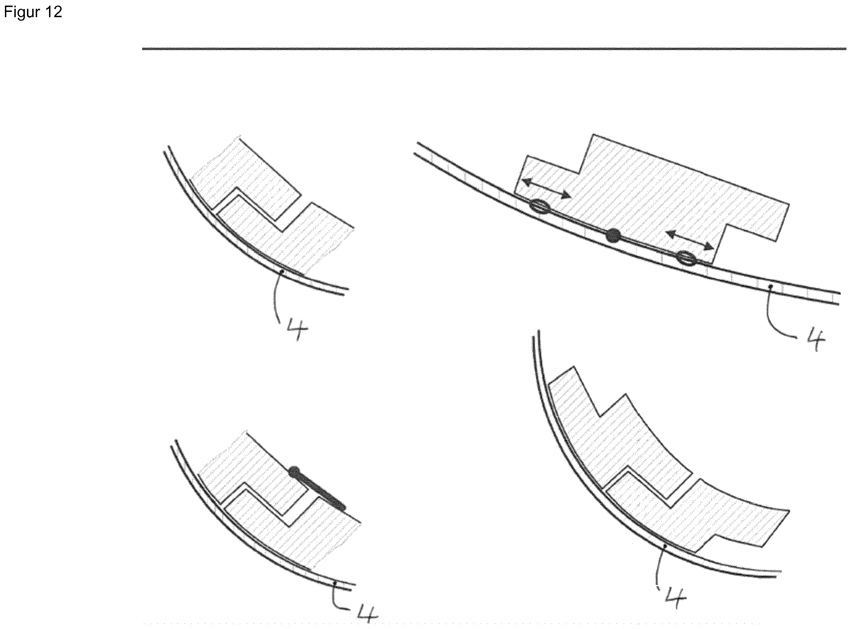

Diese Isolierkassetten haben vorzugsweise eine quaderförmige Gestalt, vorzugsweise mit einer leichten Krümmung und Falzen bzw. anderen Überlappungseinreichtungen, die eine Nut- und Federkonfiguration bilden können und sind beispielsweise in der Figur 12 dargestellt, in welcher die Bezugszeichen die hierin genannte Bedeutung haben. Die auf den Stirnseiten der Kassetten befindlichen Wände, die üblicherweise die Falz- und Überlappungsbereiche der aneinandergefügten Kassetten bilden, sind üblicherweise in dünner Metallstärke auszuführen, beispielsweise um den effektiven Gesamtwärmedurchgang zu vermindern.

Die Wandstärke der Falz-/ und Überlappungsbereich der Isolierkassetten liegt üblicherweise im Bereich von 0,2 bis 0,5 mm und ist üblicherweise geringer als die Wandstärke des restlichen Teils der Wärmedämmkassette, die üblicherweise im Bereich von 0,8 bis 1,5 mm liegt. Vorzugsweise sind die Falz- und Überlappungsbereiche der Isolierkassetten in einem welligen Muster geprägt.

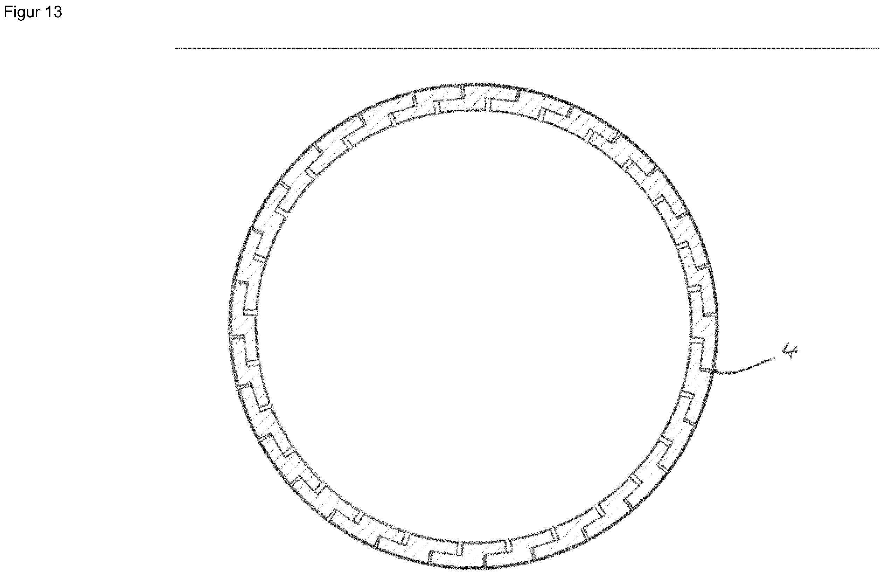

Beispielsweise werden zum Aufbau der wärmeisolierenden Schicht S die oben beschriebenen Isolierkassetten segmentartig auf der Innenseite der Seitenbegrenzung W über den Umfang angeordnet, wie beispielsweise in der Figur 13 dargestellt in welchen die Bezugszeichen die hierin genannte Bedeutung haben.

Die Isolierkassetten sind vorzugsweise in Umfangsrichtung (tangentialer Richtung) mit Schiebesitz oder anderen Überlagerungstechniken, beispielsweise Nut und Feder, ausgestattet und beispielsweise nur in Umfangsrichtung bewegungsfrei, wie beispielsweise in Figur 12 dargestellt, in welcher die Bezugszeichen die hierin genannte Bedeutung haben.

Beispiele für eine wärmeisolierende Schicht S - insbesondere in der NOx/HNO₃-Ausführungsform - welche aus den hierin beschriebenen Isolierkassetten aufgebaut ist sowie das Aneinanderfügen dieser Isolierkassetten zum Verbund der die wärmeisolierende Schicht S bildet, sind in den Figuren 12 und 13 beschrieben, in welcher die Bezugszeichen die hierin genannte Bedeutung haben.

Üblicherweise werden die Isolierkassetten bei der Temperatur der Montage, diese ist üblicherweise 0 bis 30 °C, so aneinandergefügt, dass am Ort wo die Isolierkassette einer höheren Temperatur im Reaktor R ausgesetzt ist, die Fugenweite größer ist als am Ort niedrigerer Temperatur im Reaktor R, was üblicherweise dazu führt, dass die Isolierkassetten sich unter erhöhter Betriebstemperatur im Reaktor R durch Ausdehnung praktisch ohne Spannung oder Bildung von Verwerfungen möglichst schlüssig aneinander fügen.

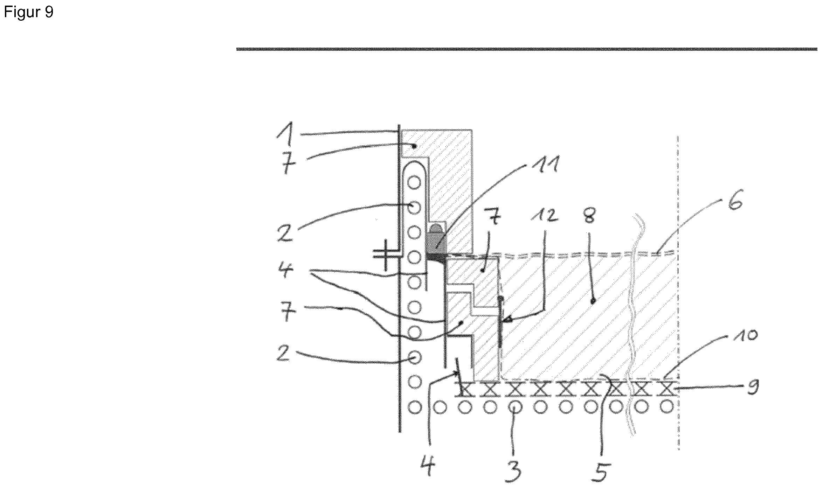

In einer Ausführungsform kann ein Teil der Seitenbegrenzung W - mit oder vorzugsweise ohne eine wärmeisolierende Schicht S - hier W1 genannt, fest mit dem Boden B verbunden sein, diesen vollständig umschließen und relativ niedrig sein, beispielsweise hat W1 eine Höhe im Bereich von 50 bis 150 mm. Der zweite Teil der Seitenbegrenzung W, hier W2 genannt, kann als "Schürze", beispielsweise in Form einer Z-förmigen Konstruktion, an der Reaktorinnenwand diese vollständig umschließend angeordnet und vorzugsweise fixiert sein, wobei das Ende der Schürze W2 als beispielsweise nach unten schauendes umgedrehtes U- oder V-Profil ausgebildet ist. In die Öffnung dieses umgedrehten Us oder Vs ragt die Seitenbegrenzung W1 hinein. Die feste Verbindung der Seitenbegrenzung W1 mit dem Boden B wird beispielsweise durch Verschweißen herbeigeführt. Die wärmeisolierende Schicht S ist, üblicherweise unterhalb eines eventuell vorhandenen Katalysatornetzes, vorzugsweise zweiteilig und vorzugsweise in Schiebesitzkonfiguration ausgestaltet, wobei üblicherweise der obere der beiden Teile der wärmeisolierenden Schicht S mit der oberen Seitenbegrenzung W2 vorzugsweise fest verbunden ist und der untere Teil der wärmeisolierenden Schicht S nicht fest mit der oberen Seitenbegrenzung W2 verbunden ist, so, dass er sich noch in vertikale Richtung auf- und abwärts bewegen kann. Es kann eine wärmeisolierende Schicht S auch oberhalb eines eventuell vorhandenen Katalysatornetzes, vorzugsweise den gesamten Rest der Seitenbegrenzung W bedeckend, angebracht sein. In einer Variante dieser Ausführungsform kann W1 mit dem Boden B nicht fest, sondern so reversibel verbunden sein, dass sie durch wenige Handgriffe von diesem gelöst und wieder mit diesem verbunden werden kann, beispielsweise durch Schweißen, Stecken, Schrauben. In Figur 9 ist diese voran beschriebene Ausführungsform beispielhaft dargestellt, worin die Bezugszeichen die hierin genannte Bedeutung haben.

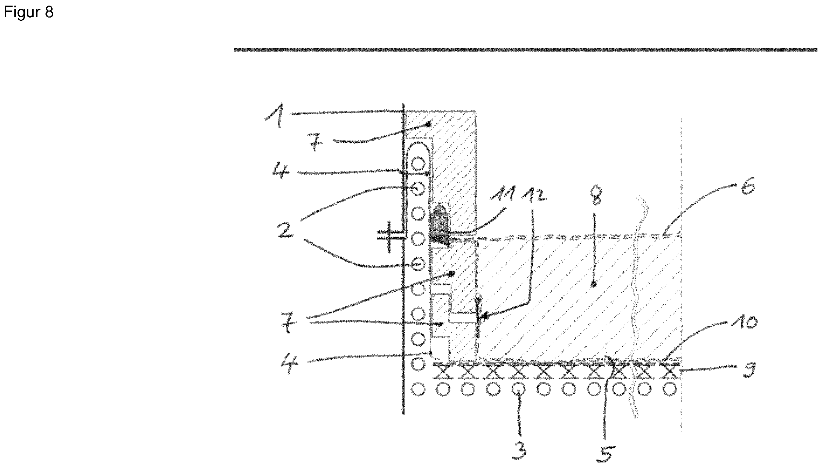

In einer weiteren Ausführungsform umschließt die Seitenbegrenzung W den Boden B vollständig und ist mit diesem nicht fest verbunden, sondern beispielsweise als "Schürze" an der Reaktorinnenwand diese vollständig umschließend angeordnet und vorzugsweise fixiert, wobei zwischen dem unteren Ende der Schürze und dem Boden B eine umlaufende Lücke ist, üblicherweise so hoch, wie die durch Temperaturerhöhung zu erwartende Längsausdehnung des Bodens B nach oben ist. Die wärmeisolierende Schicht S ist, üblicherweise unterhalb eines eventuell vorhandenen Katalysatornetzes, vorzugsweise zweiteilig und vorzugsweise in Schiebesitzkonfiguration ausgestaltet, wobei üblicherweise der obere der beiden Teile der wärmeisolierenden Schicht S mit der Seitenbegrenzung W, vorzugsweise fest, verbunden ist und der untere Teil der wärmeisolierenden Schicht S nicht fest mit der Seitenbegrenzung W verbunden ist, so, dass sich der untere Teil der wärmeisolierenden Schicht S noch in vertikale Richtung auf- und abwärts bewegen kann. Es kann eine wärmeisolierende Schicht S auch oberhalb eines eventuell vorhandenen Katalysatornetzes, vorzugsweise den gesamten Rest der Seitenbegrenzung W bedeckend, angebracht sein. In Figur 8 ist diese voran beschriebene Ausführungsform beispielhaft dargestellt, worin die Bezugszeichen die hierin genannte Bedeutung haben. Üblicherweise sind mindestens in dem Bereich der Innenwand des Reaktors R wo die Vorrichtung D aufgenommen ist zwischen der Innenwand des Reaktors R und der Außenseite der Seitenbegrenzung W der Vorrichtung D Kühlvorrichtungen, beispielsweise mit einem wärmeaufnehmenden Medium - beispielsweise Wasser oder Salzschmelze - durchströmte Rohre angeordnet, beispielsweise dadurch, dass die Rohre in Form einer Rohrwendel zwischen Reaktorinnenwand und der Außenseite der Seitenbegrenzung W angeordnet sind, wie beispielsweise in den Figuren 1, 2, 4, 5, 6,7, 8 und 9 dargestellt, worin die Bezugszeichen die hierin dargestellte Bedeutung haben. Derartige Kühlvorrichtungen haben üblicherweise die Aufgabe die Reaktorwand durch aktive Kühlung, zumindest im Bereich der Vorrichtung D und/oder der Reaktorflansche, gegen zu starke Hitze zu schützen.

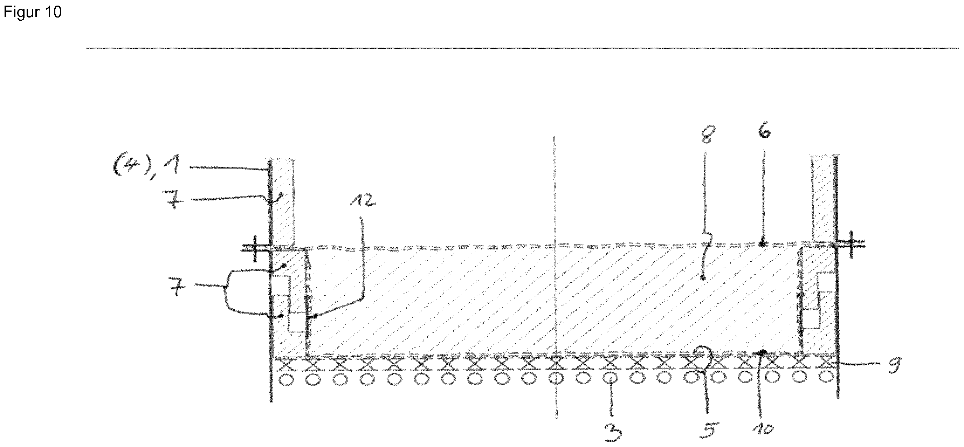

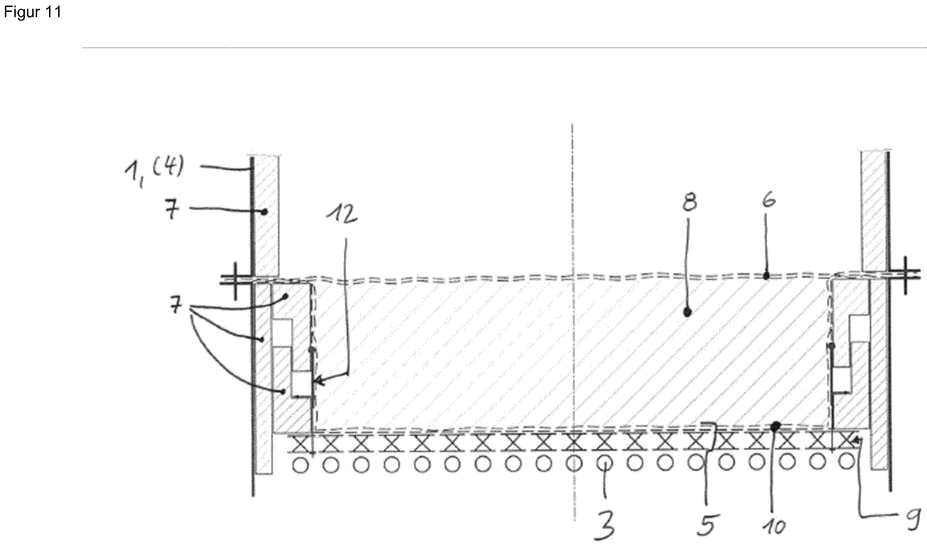

In einer Ausführungsform können die Kühlvorrichtungen an der Innenwand des Reaktors R im Bereich der Vorrichtung D gänzlich oder zum Teil durch eine wärmeisolierende Schicht S, wie hierin beschrieben, ersetzt sein, wie beispielsweise in den Figuren 10 und 11 dargestellt, worin die Bezugszeichen die hierin dargestellte Bedeutung haben.

Hierbei bildet der Bereich der Innenwand des Reaktors R wo die Vorrichtung D aufgenommen ist selbst die Seitenbegrenzung W, auf deren Innenseite sich, zumindest zum Teil, vorzugsweise vollständig und praktisch lückenlos umlaufend, die wärmeisolierende Schicht S, wie oben beschrieben - vorzugswiese aus den oben beschriebenen Isolierkassetten - und beispielsweise bis zu einer Höhe im Bereich von 200 bis 1200 mm, gemessen vom Boden B aus stromaufwärts, befindet. In den Figuren 10 und 11 ist diese Ausführungsform beispielhaft dargestellt, worin die Bezugszeichen die hierin genannte Bedeutung haben.

Auf der dem Boden B stromaufwärts gegenüberliegenden Seite kann sich mindestens ein Geflecht aus Edelmetall, beispielsweise Platin, Palladium, Rhodium und/oder Edelmetall-Legierungen, beispielsweise enthaltend die vorangenannten Edelmetallen, und/oder mindestens ein Geflecht aus Nicht-Edelmetall, beispielsweise Megapyr-Netz (Kanthal-Netz) - dieses üblicherweise zur mechanischen Stabiliesierung des Edelmetallnetzes - befinden, wie beispielsweise in den Figuren 1, 4, 5, 6, 7, 8, 9, 10, 11, 14, 15 und 16, worin die Bezugszeichen die hierin genannte Bedeutung haben, dargestellt, insbesondere für die NOx/HNO₃-Ausführungsform. Das voran beschriebene Geflecht aus Edelmetall und/oder Nicht-Edelmetall wird hierin auch "Katalysatornetz" genannt.

In diesem Fall ist das Volumen V vorzugsweise bis maximal zu dem untersten Geflecht aus Edelmetall und/oder Nicht-Edelmetall mit katalytischen und/oder nicht-katalytischen Formkörpern gefüllt, vorzugsweise so, dass diese an das unterste Netz anstoßen und so beispielsweise als praktisch vollflächige Stütze für das Geflecht aus Edelmetall und/oder Nicht-Edelmetall fungieren.

Die Gestalt und Größe der katalytischen und/oder nicht-katalytischen Formkörper ist variabel. Beispielsweise sind kleinere regelmäßig oder unregelmäßig geformte Partikel in der Regel mit einer Länge im Bereich von 3 bis 30 mm, einem Durchmesser im Bereich von 2 bis 10 mm, beispielsweise mit zylindrischem oder sternförmigen Querschnitt und/oder größere Formkörper, beispielsweise in Form von viereckigen oder sechseckigen Waben - beispielsweise mit einem Durchmesser von 3 bis 20 cm und einer Höhe von 5 bis 100 cm - oder Kombinationen aus einer unteren Lage kleinerer Partikel und einer oberen Lage von größeren Formkörpern geeignet. Letztere Variante wird bevorzugt, sollte die Füllung aus katalytischen und/oder nicht-katalytischen Formkörpern nicht bis an das Geflecht aus Edelmetall und/oder Nicht-Edelmetall reichen. Diese Variante stellt eine Konstruktion zur Stützung des genannten Geflechts dar auf der das Geflecht aufliegen kann. Die beiden Lagen aus Formkörpern werden bevorzugt durch ein Netz voneinander getrennt. Somit können beispielsweise metallische Hohlzylinder oder sechseckige wabenförmige Formkörper oder poröse inerte Formkörper oder Formkörperschüttungen durch ein Netz getrennt auf einem Bett aus kleineren katalytischen und/oder nicht-katalytischen Formkörpern angeordnet sein.

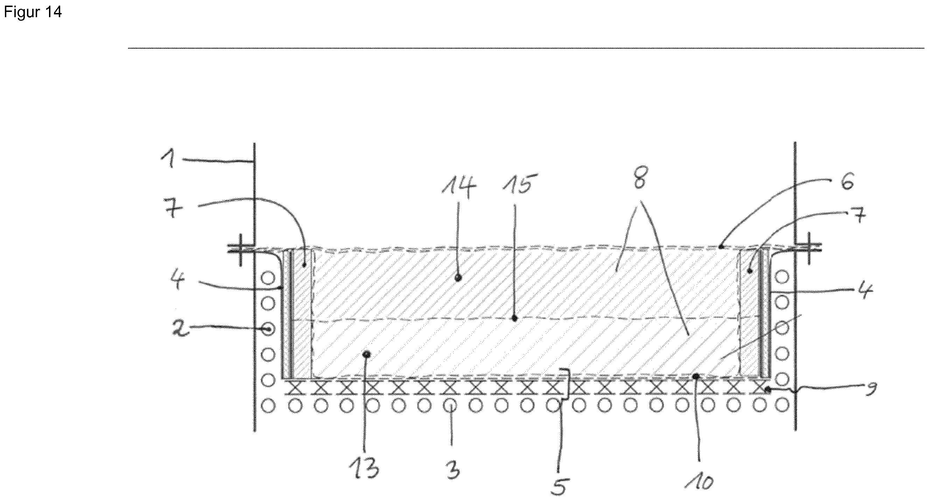

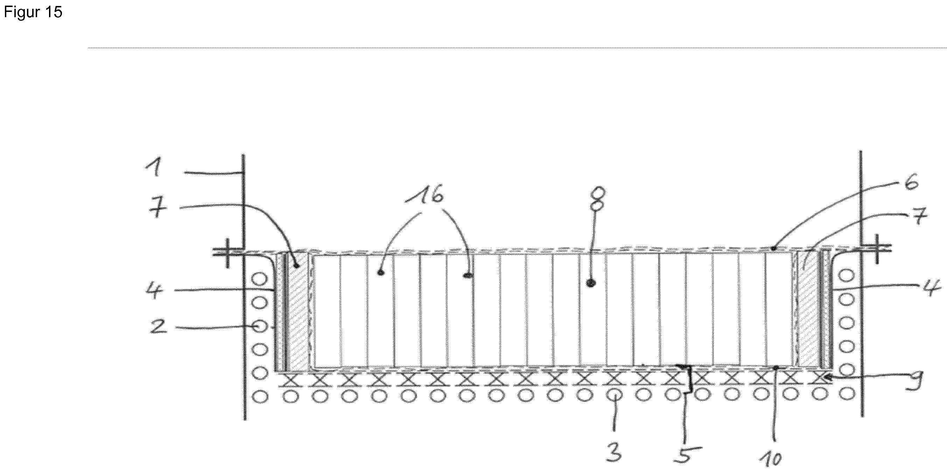

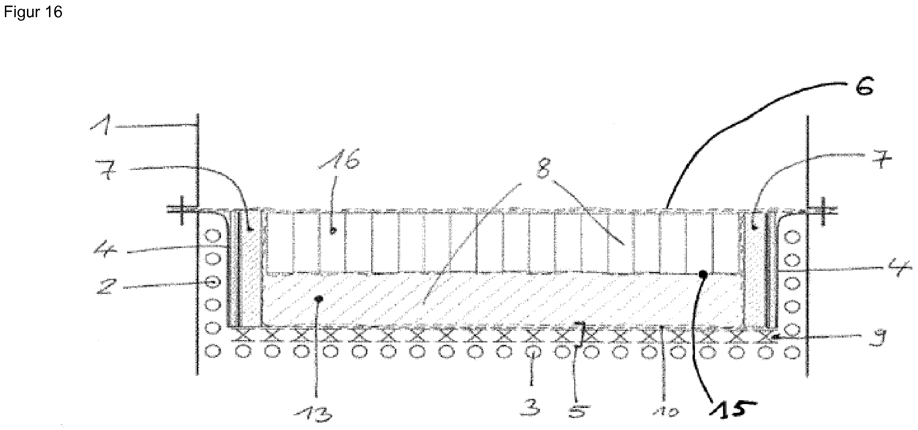

In weiteren Varianten können die genannten katalytischen und/oder nicht-katalytischen Formkörper, beispielsweise wie folgt, im Volumen V angeordnet sein, vorzugsweise bis maximal zu dem untersten Geflecht aus Edelmetall und/oder Nicht-Edelmetall:
(A) Eine Schicht katalytische Formkörper, üblicherweise kleinere regelmäßig oder unregelmäßig geformte Partikel in der Regel im Größenbereich wie oben beschrieben,
(B) Eine Schicht nicht-katalytische Formkörper üblicherweise kleinere regelmäßig oder unregelmäßig geformte Partikel in der Regel im Größenbereich wie oben beschrieben
(C) Mehrere Schichten katalytischer und/oder nicht-katalytischer Formkörper, üblicherweise kleinere regelmäßig oder unregelmäßig geformte Partikel in der Regel im Größenbereich wie oben beschrieben, alternierend oder unregelmäßig angeordnet, wie beispielsweise in Figur 14 dargestellt. Üblicherweise werden die Schichten hierbei durch Vorrichtungen, wie horizontal angeordnete perforierte Bleche oder Metallnetze, beispielsweise Megapyrnetze, horizontal getrennt.
(D) Entweder eine Schicht katalytischer oder eine Schicht nicht-katalytischer oder eine Schicht aus einer Kombination von katalytischen und nicht-katalytischen jeweils größeren Formkörpern, beispielsweise sechseckigen Waben, den Boden B praktisch lückenlos und weitgehend flächendeckend bedeckend, wie beispielsweise in Figur 15 dargestellt.
(E) Die Konfiguration (D) auf einem Bett der Konfiguration (A) oder (B) oder (C) angeordnet, wie beispielsweise in Figur 16 dargestellt.

Beispielhaft ist die Anordnung für die die genannten katalytischen und/oder nicht-katalytischen Formkörper im Volumen V in den Figuren 14 bis 16 dargestellt.
Weitere Formkörper mit den oben genannten Dimensionen können folgende sein: High Flow Ringe, Ringe, Kugeln, Stränge, Hohlstränge oder weitere Formkörper.

Nicht-katalytische Formkörper sind üblicherweise keramische, gegenüber den Reaktionsbedingungen im Reaktor R beständige und die Reaktionen im Reaktor R praktisch nicht katalysierende Formkörper.

Katalytische Formkörper sind in der Regel Formkörper welche eine oder mehrere im Reaktor R ablaufende Reaktionen, beispielsweise die Zersetzung von Distickstoffmonoxid zu Stickstoff und Sauerstoff, katalysieren.

Gegenstand der vorliegenden Anmeldung ist auch ein Reaktor R, enthaltend die Vorrichtung D, wobei ausdrücklich darauf hingewiesen wird, dass sämtliche Offenbarung zur Vorrichtung D oder andere Erfindungsgegenstände hierin in den voranstehend genannten Gegenstand der vorliegenden Anmeldung ausdrücklich inkorporiert wird.

Bei dem Reaktor R kann es sich um ein Gefäß zur Durchführung von chemischen Reaktionen, vorzugsweise im großtechnischen Maßstab, handeln.

Beispiele für derartige chemische Reaktionen sind Oxidationen von kohlenstoffhaltigen und/oder stickstoffhaltigen Verbindungen, vorzugsweise mit sauerstoffhaltigen oder halogenhaltigen Gasen. Beispiele derartiger Oxidationen sind die übliche Verbrennung von Erdöl, Naphtha, Erdgas, Kohle und dergleichen, zum Beispiel zur Erzeugung von Wärme und/oder elektrischer Energie; die katalytische Oxidation von Ammoniak mit einem sauerstoffhaltigen Gas, vorzugsweise Luft oder reiner Sauerstoff, zu Stickstoffoxiden; die sogenannte Ammonoxidation von organischen Verbindungen mit Methylgruppen oder von Methan mit Ammoniak und Sauerstoff zu Nitrilen oder Cyanwasserstoff.

Ein weiteres Beispiel für derartige chemische Reaktionen ist die, vorzugsweise katalytische, Umwandlung von Stickstoffoxiden, vorzugsweise Distickstoffoxid (N₂O), zu Stickstoff und Sauerstoff.

Vorzugsweise handelt es sich bei dem Reaktor R um ein Gefäß zur Herstellung, vorzugsweise im großtechnischen Maßstab, von chemischen Produkten, zum Beispiel zum Herstellen von Stickstoffoxiden wie NO₂, N₂O N₂O₄, NO und/oder Salpetersäure und/oder salpetrige Säure unter anderem durch katalytische Oxidation von Ammoniak mit einem sauerstoffhaltigen Gas, beispielsweise Luft; zum Herstellen von Schwefeloxiden wie SO₂, SO₃ und/oder Schwefelsäure, schweflige Säure oder weitere Säuren der Schwefeloxide.

Zum Beispiel ist der Reaktor R ein zylindrisches Gefäß zur Herstellung, vorzugsweise im großtechnischen Maßstab, von Stickstoffoxiden wie NO₂, N₂O N₂O₄, NO und/oder Salpetersäure und/oder salpetrige Säure durch katalytische Oxidation von Ammoniak mit einem sauerstoffhaltigen Gas, beispielsweise Luft oder reiner Sauerstoff. Eine für dieses Beispiel gut geeignete Vorrichtung D ist beispielsweise in den Figuren 1 bis 16 dargestellt, die hierin ausführlicher beschrieben werden. Gut geeignete Füllungen für diese Vorrichtung D sind hierin ausführlicher beschrieben und beispielsweise in den Figuren 14 bis 16 dargestellt.

Ein weiterer Gegenstand der vorliegenden Anmeldung ist die Verwendung der Vorrichtung D, in einem Verfahren zur Herstellung von Stickstoffoxiden durch katalytische Oxidation von Ammoniak, beispielsweise im Temperaturbereich von 800 bis 900 °C und an einem Netzt aus Edelmetall, wie Platin oder Platin-Rhodiumlegierung, mit einem sauerstoffhaltigen Gas, beispielsweise Luft oder reiner Sauerstoff und gegebenenfalls Umsetzung der Stickstoffoxide mit Wasser zur Salpetersäure, wobei ausdrücklich darauf hingewiesen wird, dass sämtliche Offenbarung zur Vorrichtung D oder andere Erfindungsgegenstände hierin in den voranstehend genannten Gegenstand der vorliegenden Erfindung ausdrücklich inkorporiert wird.

Ein weiterer Gegenstand der vorliegenden Anmeldung ist die Verwendung des Reaktors R, in einem Verfahren zur Herstellung von Stickstoffoxiden durch katalytische Oxidation von Ammoniak, beispielsweise im Temperaturbereich von 800 bis 900 °C und an einem Netzt aus Edelmetall, wie Platin oder Platin-Rhodiumlegierung, mit einem sauerstoffhaltigen Gas, beispielsweise Luft oder reiner Sauerstoff und gegebenenfalls Umsetzung der Stickstoffoxide mit Wasser zur Salpetersäure, wobei ausdrücklich darauf hingewiesen wird, dass sämtliche Offenbarung zur Vorrichtung D hierin und/oder dem Reaktor R oder andere Erfindungsgegenstände hierin in den voranstehend genannten Gegenstand der vorliegenden Erfindung ausdrücklich inkorporiert wird.

Ein weiterer Gegenstand der vorliegenden Anmeldung ist ein Verfahren zur Herstellung von Stickstoffoxiden wobei man Ammoniak mit einem sauerstoffhaltigen Gas, vorzugsweise Luft oder reinem Sauerstoff, beispielsweise im Temperaturbereich von 800 bis 900 °C, katalytisch, beispielsweise an einem Netzt aus Edelmetall, wie Platin oder Platin-Rhodiumlegierung oxidiert und die entstandenen Reaktionsprodukte, die in der Regel Stickstoffmonoxid als Hauptkomponente und Distickstoffoxid als Nebenkomponente enthalten, durch ein Bett mit katalytischen und/oder nicht-katalytischen Formkörpern welches üblicherweise in Strömungsrichtung stromabwärts üblicherweise unterhalb des Katalysatornetzes, angeordnet ist stömen lässt, wobei sich das Bett in einer Vorrichtung D oder einem Reaktor R, jeweils wie vorher beschrieben, befindet, wobei ausdrücklich darauf hingewiesen wird, dass sämtliche Offenbarung zur Vorrichtung D hierin und/oder dem Reaktor R oder andere Erfindungsgegenstände hierin in den voranstehend genannten Gegenstand der vorliegenden Erfindung ausdrücklich inkorporiert wird.

Ein weiterer Gegenstand der vorliegenden Anmeldung ist ein Verfahren zur Herstellung von Salpetersäure, wobei man Ammoniak mit einem sauerstoffhaltigen Gas, vorzugsweise Luft oder reinem Sauerstoff, beispielsweise im Temperaturbereich von 800 bis 900 °C, katalytisch, beispielsweise an einem Netzt aus Edelmetall, wie Platin oder Platin-Rhodiumlegierung umsetzt und die entstandenen Reaktionsprodukte, die in der Regel Stickstoffmonoxid als Hauptkomponente und Distickstoffoxid als Nebenkomponente enthalten, durch ein Bett mit katalytischen und/oder nicht-katalytischen Formkörpern welches üblicherweise in Strömungsrichtung stromabwärts, üblicherweise unterhalb des Katalysatornetzes angeordnet ist, strömen lässt, üblicherweise abkühlt, wobei sie mit Sauerstoff unter Bildung von Stickstoffdioxid reagieren und mit Wasser zur Salpetersäure umsetzt, wobei sich das Bett in einer eine Vorrichtung D oder einem Reaktor R, jeweils, wie vorher beschrieben, befindet, wobei ausdrücklich darauf hingewiesen wird, dass sämtliche Offenbarung zur Vorrichtung D hierin und/oder dem Reaktor R oder andere Erfindungsgegenstände hierin in den voranstehend genannten Gegenstand der vorliegenden Erfindung ausdrücklich inkorporiert wird.

Ausführungsbeispiele sind auch in den Figuren dargestellt und werden in der nachfolgenden Beschreibung näher erläutert.

### Bezugszeichenliste zu den Figuren

- 1: Reaktorwand des Reaktors R
- 2: Seitliche Kühlrohre
- 3: Wärmetauscherrohre
- 4: Seitenbegrenzung W
- 5: Boden B
- 6: Katalysatornetz
- 7: Wärmeisolierende Schicht S (beispielsweise aus Isolierkassetten)
- 8: Volumen V (vorzugsweise mit Füllung)
- 9: Tragteil
- 10: Bodennetz
- 11: Befestigungsvorrichtung mit Haltegewicht für Katalysatornetz
- 12: Abdeckblech
- 13: Katalytische Formkörper
- 14: Nicht-katalytische Formkörper
- 15: Trennvorrichtung für Füllungen im Volumen V
- 16: Katalytische größere Formkörper (vorzugsweise Waben)

Figur 1 zeigt im Längsschnitt einen Teil eines zylindrischen Reaktors R - vorzugsweise für die NOₓ/HNO₃-Ausführungsform - in welchem die Vorrichtung D aufgenommen ist. Es sind dargestellt: Die Reaktorwand 1 mit seitlichen Kühlrohren 2 bis in Höhe des Katalysatornetzes 6, die Vorrichtung D aus Seitenbegrenzung W 4, die als Schürze vor den seitlichen Kühlrohren 2 angeordnet ist und bis zum Boden B 5 reicht, Boden B 5, vorzugsweise auf den Wärmetauscherrohren 3 ruhend und gebildet aus einem Rost als Tragteil 9 und einem Bodennetz 10 oder mehreren Bodennetzen 10, dieses oder diese beispielsweise so hochgezogen, dass sie auch die wärmeisolierende Schicht S 7 teilweise oder vollständig bedecken, wärmeisolierende Schicht S 7, vorzugsweise aus den Isolierkassetten, mit praktisch rechteckigem Querschnitt, Volumen V 8. Über die Vorrichtung D ist ein Katalysatornetz 6 durch seitliche Fixierung an der Reaktorwand (Flansch) gespannt. Der Zwischenraum zwischen Seitenbegrenzung W 4 und wärmeisolierende Schicht S 7 kann, wie hier dargestellt, mit einem Dämm-Material, beispielsweise Blähmatten aus Vermiculit und Silikatfasern, aufgefüllt sein. In das Volumen V 8 sind üblicherweise katalytische und/oder nicht-katalytische Feststoffpartikel - beispielsweise mit zylindrischem oder sternförmigen Querschnitt - und/oder größere katalytische und/oder nicht-katalytische Formkörper, beispielsweise in Form von sechseckigen Waben, aufgenommen. Üblicherweise wird die Vorrichtung D von oben (Katalysatornetz 6) in Richtung und durch den Boden B 5 von einem gasförmigen Medium durchströmt.
Figur 2 zeigt einen Querschnitt in A-A-Richtung durch den Reaktor der Figur 1.
Figur 3 zeigt ein Tragteil 9 in Form eines Rosts der aus vier Stücken dargestellter Geometrie im Reaktor R zusammengesetzt werden kann, wobei dann die vier Stücke über Fixierpunkte - hier beispielsweise als Längs- oder Querstriche zwischen den Stücken dargestellt - miteinander verbunden werden können.

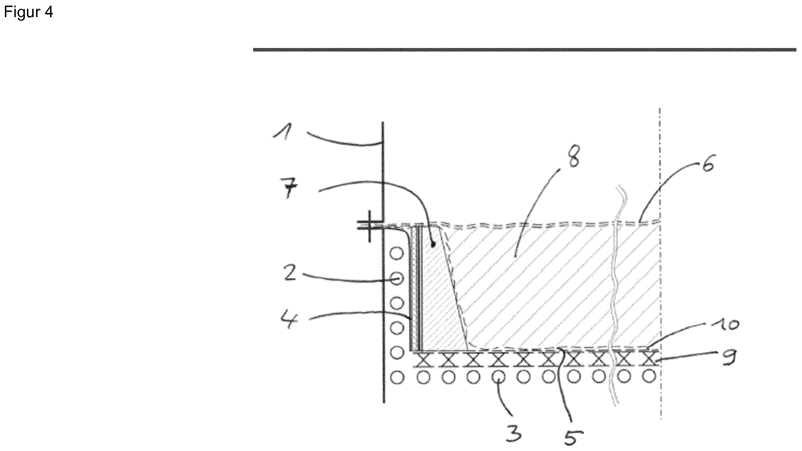

Figur 4 zeigt eine Hälfte (Vertikalschnitt) der Figur 1, mit dem Unterschied, dass die wärmeisolierende Schicht S 7 einen schrägen Querschnitt hat, hier als Trapez mit der längeren Grundseite (ergo der längeren der beiden parallelen Trapezseiten) nächst dem Boden B.

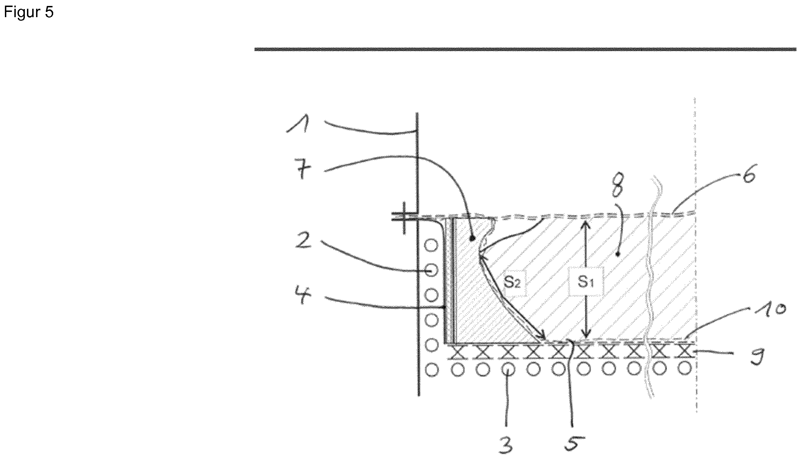

Figur 5 zeigt eine Hälfte (Vertikalschnitt) der Figur 1, mit dem Unterschied, dass die wärmeisolierende Schicht S 7 einen praktisch konkaven Querschnitt hat, wobei vorzugsweise die Strecke vom Boden B 5 in der konkaven Wölbung aufwärts, hier S2 genannt, mindestens so lang ist wie die Höhe vom Boden B 5 zum Katalysatornetz 6, hier S 1 genannt. Dies führt üblicherweise dazu, dass ein gasförmiges Medium, das durch eine in der Vorrichtung D aufgenommene Füllung von oben (Katalysatornetz 6) in Richtung und durch den Boden B 5 strömt trotz am Rand der Vorrichtung D vorhandener Vertiefungen in der genannten Füllung die gleiche Verweilzeit am Rand der Vorrichtung D hat wie in den Bereichen der Vorrichtung D, beispielsweise der Mitte, mit intakter Füllung.

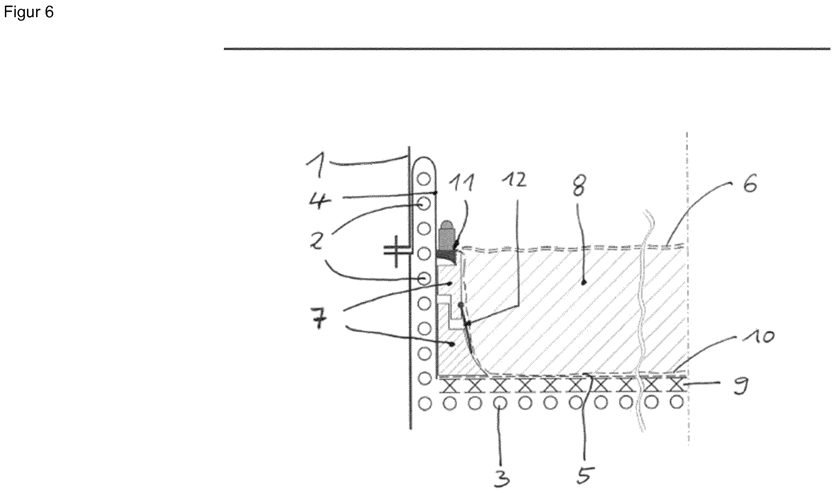

Figur 6 zeigt eine Hälfte (Vertikalschnitt) einer der Figur 1 analogen Anordnung, mit den Unterschieden, dass die seitlichen Kühlrohre 2 an der Reaktorwand 1 vertikal über die Höhe des Katalysatornetzes 6 und stromaufwärts über den Flansch hinaus angeordnet sind, die Seitenbegrenzung W 4, an der Reaktorwand 1, vorzugsweise in der Höhe des Flansches, fixiert und mit U-förmigem Bogen vor die seitlichen Kühlrohre 2 als Schürze angeordnet ist die bis zum Boden B 5 reicht. An der Seitenbegrenzung W 4 ist eine Befestigungsvorrichtung 11 aus einem in Umfangrichtung verlaufenden metallischen Tragring mit Haltegewicht für das auf dem Tragring aufliegende Katalysatornetz 6 angebracht. Ein weiterer Unterschied zu Figur 1 ist, dass die wärmeisolierende Schicht S 7, vorzugsweise aus den Isolierkassetten, in zwei Teilen ausgeführt ist, welche als Einheit betrachtet einen praktisch konkaven Querschnitt haben. Der obere Teil der wärmeisolierende Schicht S 7 ist an der Seitenbegrenzung W 4 unterhalb des Katalysatornetzes 6 befestigt. Der untere Teil der wärmeisolierende Schicht S 7 ist vorzugsweise lediglich am Boden B 5, vorzugsweise reversibel, befestigt und hat Kontakt zur Seitenbegrenzung W 4. Er passt sich im Schiebesitz in den oberen Teil der wärmeisolierenden Schicht S 7 unter Wahrung einer Dehnungsfuge ein, welche mit einem Abdeckblech 12 verschließbar ist.

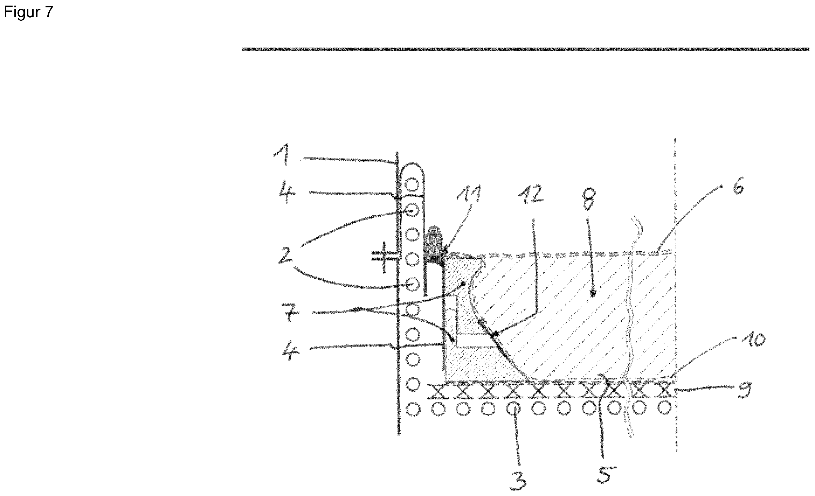

Figur 7 zeigt die Anordnung der Figur 6 mit dem Unterschied, dass die Seitenbegrenzung W 4 gebildet wird aus einer ersten U- förmigen Schürze die aber nicht bis zum Boden B 5, beispielsweise nur bis etwas unterhalb des Flansches, reicht und einer zweiten bis praktisch zum Boden B 5 reichenden oder kurz oberhalb von Boden B 5 endenden Schürze die an einem in Umfangrichtung verlaufenden an der ersten Schürze angebrachten metallischen Tragring angebracht ist, der, wiederum in Umfangrichtung verlaufend, an der ersten Schürze angebracht ist und mit einem Haltegewicht die Befestigungsvorrichtung 11 für das Katalysatornetz 6 bildet.
Figur 8 zeigt die Anordnung der Figur 6 mit den Unterschieden, dass die wärmeisolierende Schicht S 7, vorzugsweise aus den Isolierkassetten, einen rechteckigen, beispielsweise stufenartigen, Querschnitt hat und zusätzlich oberhalb des Katalysatornetzes 6 an der Seitenbegrenzung W 4, vorzugsweise diese und die Befestigungsvorrichtung mit Haltegewicht 11 umhüllend, angebracht ist.
Figur 9 zeigt die Anordnung der Figur 8 mit den Unterschieden, dass die Seitenbegrenzung W 4 zweiteilig ist, nämlich als Z-förmige Konstruktion mit einem Endstück in Form eines umgedrehten Us, welches nicht bis zum Boden B 5 reicht, sondern sich über den zweiten Teil der Seitenbegrenzung W4 stülpt, welche als Wand am Rand des Bodens B 5 angebracht ist.
Figur 10 zeigt im Längsschnitt einen Teil eines zylindrischen Reaktors R - vorzugsweise für die NOₓ/HNO₃-Ausführungsform - in welchem die Vorrichtung D aufgenommen ist. Es sind dargestellt: Die Reaktorwand 1, die Vorrichtung D aus Seitenbegrenzung W 4, welche hier durch die Reaktorwand 1 gebildet wird, Boden B 5, vorzugsweise auf den Wärmetauscherrohren 3 ruhend und gebildet aus einem Rost als Tragteil 9 und einem Bodennetz 10 oder mehreren Bodennetzen 10, dieses oder diese beispielsweise so hochgezogen, dass sie auch die wärmeisolierende Schicht S 7 teilweise oder vollständig bedecken. Über die Vorrichtung D ist ein Katalysatornetz 6 durch seitliche Fixierung an der Reaktorwand (Flansch) gespannt. Die wärmeisolierende Schicht S 7, vorzugsweise aus den Isolierkassetten, ist unterhalb des Katalysatornetzes 6 in zwei Teilen ausgeführt und hat einen rechteckigen stufenartigen Querschnitt. Der obere Teil der wärmeisolierende Schicht S 7 ist an der Reaktorwand 1 unterhalb des Katalysatornetzes 6 befestigt. Der untere Teil der wärmeisolierende Schicht S 7 ist vorzugsweise lediglich am Boden B 5, vorzugsweise reversibel, befestigt und hat Kontakt zur Reaktorwand 1. Er passt sich im Schiebesitz in den oberen Teil der wärmeisolierenden Schicht S 7 unter Wahrung einer Dehnungsfuge ein, welche mit einem Abdeckblech 12 verschließbar ist. Die wärmeisolierende Schicht S 7, vorzugsweise aus den Isolierkassetten, ist oberhalb des Katalysatornetzes 6 bis zu einer Höhe im Bereich von beispielsweise 250 bis 2000 mm an der Reaktorwand 1 angebracht und hat einen rechteckigen Querschnitt. In das Volumen V 8 sind üblicherweise katalytische und/oder nicht-katalytische Feststoffpartikel - beispielsweise mit zylindrischem oder sternförmigem Querschnitt - und/oder größere katalytische und/oder nicht-katalytische Formkörper, beispielsweise in Form von sechseckigen Waben, aufgenommen. Üblicherweise wird die Vorrichtung D von oben (Katalysatornetz 6) in Richtung und durch den Boden B 5 von einem gasförmigen Medium durchströmt.
Figur 11 zeigt die Anordnung der Figur 10 mit dem Unterschied, dass die zweiteilige, sich unterhalb des Katalysatornetzes 6 befindliche und im Schiebesitz ausgeführte wärmeisolierende Schicht S 7, vorzugsweise aus den Isolierkassetten, auf einer weiteren wärmeisolierenden Schicht S 7 angebracht ist, die unterhalb des Katalysatornetzes 6 bis in die Höhe der Wärmetauscherrohre 3 an der Reaktorwand 1 angebracht ist, einen rechteckigen Querschnitt hat und vorzugsweise aus Isolierkassetten aufgebaut ist.
Figur 12 zeigt Beispiele für Isolierkasetten, üblicherweise aus Metall und mit mikroporösem gegenüber höheren Temperaturen beständigen Material gefüllt, mit zwei Längsseiten, eine dem Bereich höherer Temperatur, die andere dem Bereich niedrigerer Temperatur zugewandt - letzterer üblicherweise die Seitenbegrenzung W 4 - und Falz- und Überlappungsbereichen an den Stirnseiten der Isolierkassetten über die diese zur umlaufenden wärmeisolierenden Schicht S zusammengesetzt werden, beispielsweise wie dargestellt.
Figur 13 zeigt schematisch eine wärmeisolierende Schicht S 7, die an einer Seitenbegrenzung W 4 anliegt und aus aneinandergefügten Isolierkassetten, wie beispielsweise in Figur 12 dargestellt, aufgebaut ist.
Die Figuren 14 bis 16 zeigen die Anordnung der Figur 1 mit dem Unterschied, dass in das Volumen V 8 unterschiedliche Partikel und/oder Formkörper in unterschiedlicher Konfiguration wie folgt aufgenommen sind:
In Figur 14 befindet sich im Volumen V 8 eine untere Schicht aus katalytischen Formkörpern 13 und eine obere Schicht aus nicht-katalytischen Formkörpern 14, jeweils in Partikelform und jeweils wie in der Beschreibung beschrieben. Üblicherweise werden die Schichten hierbei durch Trennvorrichtungen 15, wie horizontal angeordnete perforierte Bleche oder Metallnetze, beispielsweise Megapyrnetze, horizontal getrennt.
In Figur 15 befindet sich im Volumen V 8 eine Schicht katalytischer größerer Formkörper 16, wie in der Beschreibung beschrieben, beispielsweise sechseckigen Waben mit ca. 6 cm Durchmesser und ca. 25 cm Höhe, aber zumindest so hoch, dass sie das Katalysatornetz 6 zumindest stellenweise stützen, den Boden B 5 praktisch lückenlos und weitgehend flächendeckend bedeckend.
In Figur 16 befindet sich im Volumen V 8 eine untere Schicht aus katalytischen Formkörpern 13 und eine obere Schicht aus katalytischen größeren Formkörpern 16, jeweils wie in der Beschreibung beschrieben, beispielsweise als größere Formkörper sechseckige Waben mit ca. 6 cm Durchmesser und ca. 25 cm Höhe, aber zumindest so hoch, dass sie das Katalysatornetz 6 in dieser Konfiguration zumindest stellenweise stützen. Üblicherweise werden die Schichten hierbei durch Trennvorrichtungen 15, wie horizontal angeordnete perforierte Bleche oder Metallnetze, beispielsweise Megapyrnetze, horizontal getrennt.

### Beispiele

### Allgemein

Ein Ammoniak-Luftgemisch (12,5 Vol-% NH₃, 87,5 Vol-% Luft) wird dem Ammoniakverbrennungsofen (Reaktor R), in dem eine Vorrichtung D in Gestalt eines Korbes aufgenommen ist, zugeführt. Die korbartige Vorrichtung D hat einen lichten Durchmesser von 3,52 m. Der Reaktor R wird mit einem Ammoniak-Luftgemisch-Durchsatz von 3650 Nm³/h und pro m² Katalysatornetzfläche betrieben. Die Eintrittstemperatur des Ammoniak-Luft-Gemisches in den Reaktor R beträgt 28,4 °C und der Druck vor dem Platin-Katalysatornetz im Reaktor R 1080 mbar (abs.). Am Platin-Katalysatornetz verbrennt das Ammoniak bei Temperaturen von ca. 880 °C zum Reaktionsprodukt welches dann durch die Vorrichtung D, enthaltend eine katalytisch aktive Füllung, geleitet wird und Stickstoffmonoxid als Hauptkomponente und geringe Mengen Distickstoffmonoxid N₂O ("Lachgas") enthält. Die Lachgaskonzentration des Reaktionsprodukts beträgt direkt nach dem Platin-Katalysatornetz, also noch vor dem Auftreffen auf die katalytisch aktive Füllung der korbartigen Vorrichtung D, ca. 1000 ppm. Dem Platinnetz nachgeschaltet ist die korbartige Vorrichtung D, enthaltend eine 150 mm hohe Schicht aus Vollkatalysatorstränglingen, wobei diese Stränglinge einen sternförmigem Querschnitt, einen Durchmesser von ca. 6 mm und eine Länge von 5 bis 30 mm haben und aus einer Mischung von CuO, ZnO und Al₂O₃ bestehen.

Die nicht-netzartigen Teile der korbartigen Vorrichtung D bestehen aus Inconel 600, die Seitenbegrenzung W, ist ca. 250 mm hoch.

Direkt nach dem Platin-Katalysatornetz (Entnahmestelle 1) und in der Mitte des Reaktors R stromabwärts direkt unterhalb des Bodens B der Vorrichtung D (Entnahmestelle 2) sowie an der Peripherie des Reaktors stromabwärts direkt unterhalb des äußeren Randbereichs des Bodens B der Vorrichtung D (Entnahmestelle 3) können Proben des Reaktionsprodukts entnommen werden und auf Lachgaskonzentration mittels GC/MS-Methode untersucht werden.

Für den erfindungsgemäßen Versuch ist die korbartige Vorrichtung D bzw. der Reaktor R wie in Figur 1 und Figur 2 dargestellt und beschrieben aufgebaut und wie in Figur 1 und Figur 2 dargestellt und beschrieben in den Reaktor aufgenommen. Die wärmeisolierende Schicht S befindet sich vom Boden B der Vorrichtung D bis zum Katalysatornetz und umschließt den Boden B vollständig. Sie ist aus den hierin und nachstehend beschriebenen Isolierkassetten und wie in den Figuren 12 und 13 dargestellt aufgebaut. Die Isolierkassetten bestehen aus einem Metallgehäuse aus Inconel 600 auf der höherer Temperatur zugewandten Isolierkassettenseite und Werkstoff 1.4541 auf der geringerer Temperatur zugewandten Isolierkassettenseite. Die Isolierkassetten sind mit mikroporösen silikatischen Substanzen gefüllt die durch Silikatfasermatten zur Metallwand hin beabstandet sind.

Für den Versuch zu Vergleichszwecken (nicht erfindungsgemäß) wird die gleiche Vorrichtung verwendet, allerdings ohne die wärmeisolierende Schicht S.

Nach neun Monaten Betriebsdauer des Reaktors R wird die Vorrichtung D und deren Füllung geprüft. Lachgaskonzentrationen werden während des Betriebs des Reaktors R gemessen.

### Vergleichsbeispiel 1 (nicht erfindungsgemäß)

Im kontinuierlichen Verfahren wird ein Ammoniak-Luftgemisch wie oben beschrieben umgesetzt, wobei keine erfindungsgemäße wärmeisolierende Schicht S in der Vorrichtung D verwendet wird.

Der Randbereich der Vorrichtung D weist eine trichterförmige Vertiefung in Form eines Grabens von 96 mm Tiefe in der katalytisch aktiven Füllung auf, deren Höhe im Randbereich der Vorrichtung D nur noch 54 mm (vor Versuchsbeginn 150 mm) beträgt.

Die gemessene Lachgaskonzentration an der Entnahmestelle 3 praktisch unterhalb der trichterförmigen Vertiefung beträgt 676 ppm Lachgas, an der Entnahmestelle 2 beträgt die gemessene Lachgaskonzentration 186 ppm so dass die gemittelte gemessene Lachgaskonzentration stromabwärts nach der Vorrichtung D und dem stromabwärts darunter liegenden Wärmetauscher 227 ppm beträgt.

### Beispiel 1 (erfindungsgemäß)

Im kontinuierlichen Verfahren wird ein Ammoniak-Luftgemisch wie oben beschrieben umgesetzt, wobei eine 100 mm dicke erfindungsgemäße wärmeisolierende Schicht S, wie oben beschrieben, in der Vorrichtung D verwendet wird.

Der Randbereich der Vorrichtung D weist nur noch eine geringe trichterförmige Vertiefung in Form eines Grabens von 45 mm Tiefe in der katalytisch aktiven Füllung auf, deren Höhe im Randbereich der Vorrichtung D noch 105 mm (vor Versuchsbeginn 150 mm) beträgt.

Die gemessene Lachgaskonzentration an der Entnahmestelle 3 praktisch unterhalb der trichterförmigen Vertiefung beträgt 411 ppm Lachgas, an der Entnahmestelle 2 beträgt die gemessene Lachgaskonzentration 188 ppm so dass die gemittelte gemessene Lachgaskonzentration stromabwärts nach der Vorrichtung D und dem stromabwärts darunter liegenden Wärmetauscher 204 ppm beträgt.

## Patentansprüche

1. In einem Reaktor R aufnehmbare Vorrichtung D enthaltend einen gas-und/oder flüssigkeits-durchlässigen Boden B (5), in dessen Randbereich eine Seitenbegrenzung W (4) angeordnet ist, die den Boden B (5) vollständig umschließt und ein Volumen V (8) bildet, das zum Teil oder vollständig mit katalytischen (13) und/oder nicht-katalytischen Formkörpern (14) gefüllt ist, wobei sich gegebenenfalls auf der dem Boden B (5) stromaufwärts gegenüberliegenden Seite mindestens ein Geflecht (6) aus Edelmetall und/oder Nicht-Edelmetall befindet und wobei sich zumindest auf einem Teil der Fläche der Innenseite der Seitenbegrenzung W (4) der Vorrichtung D eine wärmeisolierende Schicht S (7) befindet, **dadurch gekennzeichnet, dass**, das Material für die wärmeisolierende Schicht S (7) mikroporöses Material ist, das sich im Temperaturbereich von ca. 700 bis 1100 °C nicht zersetzt und eine Wärmeleitfähigkeit im Bereich von 0,04 bis 0,09 W/m/K hat und, wobei das mikroporöse Material mikroporöse silikatische Substanzen, enthaltend hochdisperse Kieselsäure und Trübungsmittel, sind.

2. Vorrichtung D nach Anspruch 1, wobei die wärmeisolierende Schicht S (7) 30% bis praktisch 100% der Fläche der Innenseite der Seitenbegrenzung W (4) bedeckt.

3. Vorrichtung D nach Anspruch 1 bis 2, wobei die wärmeisolierende Schicht S (7) mindestens die unteren 30% der Fläche der Innenseite der Seitenbegrenzung W (4) bedeckt.

4. Vorrichtung D nach Anspruch 1 bis 3, wobei der Querschnitt des Bodens B (5) praktisch rund ist.

5. Vorrichtung D nach Anspruch 1 bis 4, wobei sich auf der dem Boden B (5) stromaufwärts gegenüberliegenden Seite mindestens ein Geflecht (6) aus Edelmetall und/oder Nicht-Edelmetall befindet.

6. Vorrichtung D nach Anspruch 1 bis 5, wobei das Volumen V (8) bis maximal zu dem untersten Geflecht (6) aus Edelmetall und/oder Nicht-Edelmetall mit katalytischen (13) und/oder nicht-katalytischen Formkörpern (14) gefüllt ist.

7. Reaktor R enthaltend die Vorrichtung D, wie in den Ansprüchen 1 bis 6 definiert, wobei mindestens in dem Bereich der Innenwand (1) des Reaktors R wo die Vorrichtung D aufgenommen ist zwischen der Innenwand (1) des Reaktors R und der Außenseite der Seitenbegrenzung W (4) der Vorrichtung D Kühlvorrichtungen (2) angeordnet sein können.

8. Reaktor R nach Anspruch 7, dessen Querschnitt praktisch rund ist.

9. Reaktor R nach Anspruch 7 bis 8, wobei Kühlvorrichtungen (2) an der Innenwand (1) des Reaktors R im Bereich der Vorrichtung D gänzlich oder zum Teil durch eine wärmeisolierende Schicht S (7) ersetzt sind.

10. Verwendung der Vorrichtung D, wie in den Ansprüchen 1 bis 6 definiert in einem Verfahren zur Herstellung von Stickstoffoxiden durch katalytische Oxidation von Ammoniak mit einem sauerstoffhaltigen Gas und gegebenenfalls Umsetzung der Stickstoffoxide mit Wasser zur Salpetersäure.

11. Verwendung des Reaktors R, wie in den Ansprüchen 7 bis 9 definiert in einem Verfahren zur Herstellung von Stickstoffoxiden durch katalytische Oxidation von Ammoniak mit einem sauerstoffhaltigen Gas und gegebenenfalls Umsetzung der Stickstoffoxide mit Wasser zur Salpetersäure.

12. Verfahren zur Herstellung von Stickstoffoxiden, wobei man Ammoniak mit einem sauerstoffhaltigen Gas katalytisch oxidiert und die so entstehenden Reaktionsprodukte durch ein Bett mit katalytischen und/oder nicht-katalytischen Formkörpern strömen lässt, **dadurch gekennzeichnet, dass** sich das Bett in einer Vorrichtung D, wie in den Ansprüchen 1 bis 6 definiert, befindet.

13. Verfahren zur Herstellung von Salpetersäure wobei man Ammoniak mit einem sauerstoffhaltigen Gas katalytisch oxidiert und die so entstehenden Reaktionsprodukte durch ein Bett mit katalytischen und/oder nicht-katalytischen Formkörpern strömen lässt und danach mit Wasser zur Salpetersäure umsetzt, **dadurch gekennzeichnet, dass** sich das Bett in einer Vorrichtung D, wie in den Ansprüchen 1 bis 6 definiert, befindet.

14. Verfahren gemäß Anspruch 12, **dadurch gekennzeichnet, dass** man die Oxidation in einem Reaktor R, wie in Anspruch 7 bis 9 definiert, durchführt.

15. Verfahren gemäß Anspruch 13, **dadurch gekennzeichnet, dass** man die Oxidation in einem Reaktor R, wie in Anspruch 7 bis 9 definiert, durchführt.

## Claims

1. A device D which can be accommodated in a reactor R and contains a gas- and/or liquid-permeable bottom B (5), in the peripheral region of which is arranged a lateral boundary W (4) which completely surrounds the bottom B (5) and forms a volume V (8) which is partially or completely filled with catalytic (13) and/or non-catalytic (14) moldings, there optionally being located on the side facing the bottom B (5) in the upstream direction at least one noble metal and/or non-noble metal fabric (6) and a thermal insulation layer S (7) being located on at least part of the surface of the inner side of the lateral boundary W (4) of the device D, wherein the material for the thermal insulation layer S (7) is microporous material which does not decompose in the temperature range from approx. 700 to 1100°C and has a thermal conductivity in the range from 0.04 to 0.09 W/m/K, and the microporous material being microporous silicatic substances containing highly dispersed silica and opacifiers.

2. The device D as claimed in claim 1, wherein the thermal insulation layer S (7) covers 30% to virtually 100% of the surface of the inner side of the lateral boundary W (4).

3. The device D as claimed in claims 1 to 2, wherein the thermal insulation layer S (7) covers at least the lower 30% of the surface of the inner side of the lateral boundary W (4).

4. The device D as claimed in claims 1 to 3, wherein the cross-section of the bottom B (5) is virtually round.

5. The device D as claimed in claims 1 to 4, wherein on the side facing the bottom B (5) in the upstream direction there is located at least one noble metal and/or non-noble metal fabric (6).

6. The device D as claimed in claims 1 to 5, wherein the volume V (8) is filled with catalytic (13) and/or non-catalytic (14) moldings at most up to the undermost noble metal and/or non-noble metal fabric (6).

7. A reactor R containing the device D as defined in claims 1 to 6, wherein, at least in the region of the internal wall (1) of the reactor R where the device D is accommodated, cooling devices (2) may be arranged between the internal wall (1) of the reactor R and the outer side of the lateral boundary W (4) of the device D.

8. The reactor R as claimed in claim 7, the cross-section of which is virtually round.

9. The reactor R as claimed in claims 7 to 8, wherein cooling devices (2) on the internal wall (1) of the reactor R in the region of device D are entirely or partially replaced by a thermal insulation layer S (7).

10. Use of the device D as defined in claims 1 to 6 in a method for producing nitrogen oxides by catalytic oxidation of ammonia with an oxygen-containing gas and optional reaction of the nitrogen oxides with water to yield nitric acid.

11. Use of the reactor R as defined in claims 7 to 9 in a method for producing nitrogen oxides by catalytic oxidation of ammonia with an oxygen-containing gas and optional reaction of the nitrogen oxides with water to yield nitric acid.

12. A method for producing nitrogen oxides, ammonia being catalytically oxidized with an oxygen-containing gas and the resultant reaction products being passed through a bed with catalytic and/or non-catalytic moldings, wherein the bed is located in a device D as defined in claims 1 to 6.

13. A method for producing nitric acid, ammonia being catalytically oxidized with an oxygen-containing gas and the resultant reaction products being passed through a bed with catalytic and/or non-catalytic moldings and thereafter being reacted with water to yield nitric acid, wherein the bed is located in a device D as defined in claims 1 to 6.

14. The method as claimed in claim 12, wherein oxidation is carried out in a reactor R as defined in claims 7 to 9.

15. The method as claimed in claim 13, wherein oxidation is carried out in a reactor R as defined in claims 7 to 9.

## Revendications

1. Dispositif D pouvant être logé dans un réacteur R, contenant un fond B (5) perméable aux gaz et/ou aux liquides, qui présente dans sa partie périphérique une délimitation latérale W (4) qui entoure entièrement le fond B (5) et forme un volume V (8) rempli en partie ou en totalité avec des corps moulés catalytiques (13) et/ou non catalytiques (14), au moins un treillis (6) constitué d'un métal noble et/ou d'un métal non noble se trouvant éventuellement sur la face opposée en amont au fond B (5) et une couche d'isolation thermique S (7) se trouvant au moins sur une partie de la surface de la face intérieure de la délimitation latérale W (4) du dispositif D, **caractérisé en ce que** le matériau de la couche d'isolation thermique S (7) est un matériau microporeux qui ne se décompose pas dans la plage de température allant d'environ 700 à 1 100 °C et a une conductivité thermique dans la plage allant de 0,04 à 0,09 W/m/K, le matériau microporeux étant une substance silicatée microporeuse, contenant de la silice hautement dispersée et des opacifiants.

2. Dispositif D selon la revendication 1, dans lequel la couche d'isolation thermique S (7) recouvre de 30 % à pratiquement 100 % de la surface de la face intérieure de la délimitation latérale W (4).

3. Dispositif D selon les revendications 1 à 2, dans lequel la couche d'isolation thermique S (7) recouvre au moins les 30 % inférieurs de la surface de la face intérieure de la délimitation latérale W (4).

4. Dispositif D selon les revendications 1 à 3, dans lequel la section transversale du fond B (5) est pratiquement ronde.

5. Dispositif D selon les revendications 1 à 4, dans lequel au moins un treillis (6) constitué d'un métal noble et/ou d'un métal non noble se trouve sur la face opposée en amont au fond B (5).

6. Dispositif D selon les revendications 1 à 5, dans lequel le volume V (8) est rempli avec des corps moulés catalytiques (13) et/ou non catalytiques (14) au maximum jusqu'au treillis (6) constitué d'un métal noble et/ou d'un métal non noble le plus inférieur.

7. Réacteur R contenant le dispositif D, tel que défini dans les revendications 1 à 6, dans lequel des dispositifs de refroidissement (2) peuvent être agencé au moins dans la zone de la paroi intérieure (1) du réacteur R où le dispositif D est logé entre la paroi intérieure (1) du réacteur R et la face extérieure de la délimitation latérale W (4) du dispositif D.

8. Réacteur R selon la revendication 7, dont la section transversale est pratiquement ronde.

9. Réacteur R selon les revendications 7 à 8, dans lequel des dispositifs de refroidissement (2) sur la paroi intérieure (1) du réacteur R dans la zone du dispositif D sont remplacés en totalité ou en partie par une couche d'isolation thermique S (7).

10. Utilisation du dispositif D, tel que défini dans les revendications 1 à 6, dans un procédé de fabrication d'oxydes d'azote par oxydation catalytique d'ammoniac avec un gaz contenant de l'oxygène et éventuellement mise en réaction des oxydes d'azote avec de l'eau pour former de l'acide nitrique.

11. Utilisation du réacteur R, tel que défini dans les revendications 7 à 9, dans un procédé de fabrication d'oxydes d'azote par oxydation catalytique d'ammoniac avec un gaz contenant de l'oxygène et éventuellement mise en réaction des oxydes d'azote avec de l'eau pour former de l'acide nitrique.

12. Procédé de fabrication d'oxydes d'azote, selon lequel de l'ammoniac est oxydé catalytiquement avec un gaz contenant de l'oxygène et les produits de réaction ainsi formés sont éventuellement laissés traverser un lit contenant des corps moulés catalytiques et/ou non catalytiques, **caractérisé en ce que** le lit se trouve dans un dispositif D, tel que défini dans les revendications 1 à 6.

13. Procédé de fabrication d'acide nitrique, selon lequel de l'ammoniac est oxydé catalytiquement avec un gaz contenant de l'oxygène et les produits de réaction ainsi formés sont éventuellement laissés traverser un lit contenant des corps moulés catalytiques et/ou non catalytiques, puis mis en réaction avec de l'eau pour former de l'acide nitrique, **caractérisé en ce que** le lit se trouve dans un dispositif D, tel que défini dans les revendications 1 à 6.

14. Procédé selon la revendication 12, **caractérisé en ce que** l'oxydation est réalisée dans un réacteur R, tel que défini dans les revendications 7 à 9.

15. Procédé selon la revendication 13, **caractérisé en ce que** l'oxydation est réalisée dans un réacteur R, tel que défini dans les revendications 7 à 9.
